# EUROPÄISCHE PATENTANMELDUNG

(11) **EP 1 886 854 A1**
(43) Veröffentlichungstag der Anmeldung: **13.02.2008**
(21) Anmeldenummer: 07009395.0
(22) Anmeldetag: 10.05.2007
(51) Int. Cl.: B60J 1/20, B60J 1/17

(54) **Manuelles Fensterrollo mit automatischem Rückzug**

(30) Priorität: 10.08.2006 DE 102006037609
(71) Anmelder: BOS GmbH & Co. KG, 73760 Ostfildern (DE)
(72) Erfinder: Fischer, Erik, 70619 Stuttgart (DE)
(74) Vertreter: Rüger, Barthelt & Abel Patentanwälte

(57) **Zusammenfassung**

Ein Fensterrollo für Kraftfahrzeugtüren (1) weist eine unterhalb der Fensterunterkante (17) angeordnete Wickelwelle (22) auf. An der Wickelwelle (22) ist mit einer Kante die Rollobahn (24) befestigt, deren andere Kante an einem Zugstab (25) angebracht ist. Der Zugstab (25) ist mit wenigstens einem Tragstab (27) verbunden, der etwa rechtwinklig zu dem Zugstab (25) angeordnet ist und in den Korpus (2) der Tür hineinragt. Dort ist der Tragstab (27) geführt und er ist an seinem innenliegenden Ende mit einem Mitnehmer (31) versehen. Der Mitnehmer (31) ist dazu eingerichtet mit der Scheibenunterkante (17) zusammen zu wirken, damit beim Öffnen des Fensters halbautomatisch auch das Rollo geöffnet wird.

## Beschreibung

Um den Innenraum eines Pkws zu beschatten werden Fensterrollos verwendet. Dabei unterscheidet man manuelle Fensterrollos und elektrisch betätigte Fensterrollos. Bei den manuellen Fensterrollos ist unterhalb der Fensterunterkante im Korpus der Tür eine Wickelwelle drehbar gelagert. An der Wickelwelle ist mit einer Kante die Rollobahn befestigt, deren andere von der Wickelwelle abliegende und damit parallele Kante an einem Zugstab angebracht ist. Mittels eines Federmotors ist die Wickelwelle im Sinne des Aufwickelns der Rollobahn auf die Wickelwelle vorgespannt.

Der Zugstab trägt einen Griff, der von Hand zu erfassen ist. Wenn die Rollobahn ausgefahren werden soll, wird dieser Griff erfasst und in Richtung auf die Fensteroberkante bewegt. Dabei wird die Rollobahn gegen die Wirkung des Federmotors von der Wickelwelle abgezogen. In der obersten Stellung wird der Zugstab oder der Griff oder ein spezieller Haken in einer an dem Fensterrahmen befindliche Einrichtung eingehängt, um die Rollobahn vor dem Fenster aufgespannt zu halten.

Zum Einfahren der Rollobahn muss der Griff wieder erfasst werden, um den Zugstab aus der Einhängeeinrichtung auszuhaken und ihn von Hand zur Fensterunterkante zu führen. Dabei wird gleichzeitig die Rollobahn auf der Wickelwelle aufgewickelt. Sie läuft dabei durch einen Schlitz hindurch zwischen der Fensterscheibe und Teilen der Innenverkleidung der Fahrzeugtür.

Die manuelle Betätigung der Rollobahn ist nicht in jeglicher Hinsicht mit modernen elektrischen betriebenen Fensterscheiben kompatibel. Es ist durchaus möglich, bei aufgespannter Rollobahn die Fensterscheibe auf elektrischem Wege zu öffnen. Dadurch wird die Rollobahn der außen vorbei strömenden Luft ausgesetzt und gerät ins Flattern. Die Gefahr ist groß, hierbei die Rollobahn zu beschädigen.

Wenn das Fenster einmal geöffnet ist, ist es auch nicht einfach, die Rollobahn wieder kontrolliert auf die Wickelwelle aufwickeln zu lassen. Die bei fahrendem Fahrzeug vorbei strömende Luft kann, je nach den Druckverhältnissen um die Karosserie, dazu neigen, entweder die Rollobahn nach außen zu saugen, oder in das Fahrzeuginnere zu drücken, wobei gleichzeitig ein erheblicher Ballon entsteht, womit das Rückziehen der Rollobahn schwierig wird. Insbesondere kann die durch die Luft hervorgerufene Kraft größer sein als die Kraft, die der Federmotor aufzubringen vermag, was beim nach unten Führen des Zugstabs lediglich ein großer Ballon entstehen lässt, ohne das überhaupt ein Stück Rollobahn auf der Wickelwelle aufgewickelt wird.

Neben diesen aus der Praxis bekannten Rollos gibt es auch ein elektrisch betätigtes Fensterrollo, wie es aus der DE 100 05 970 A1 bekannt ist. In dem Korpus der Fahrzeugtür sind unterhalb der Fensterunterkante zwei Führungen vorgesehen, in denen biegeelastische Tragstäbe rechtwinklig zu der Fensterunterkante geführt sind. Diese Tragstäbe dienen dazu, eine Rollobahn aufzuspannen, die, wie bei den manuellen Rollos, mit einer Wickelwelle verbunden ist. Die Wickelwelle ist wiederum unterhalb der Fensterunterkante in dem Korpus der Tür drehbar gelagert und mittels eines Federmotors in Aufwickelrichtung der Rollobahn vorgespannt. An der freien Kante der Rollobahn, d.h. jener Kante, die beim Aufspannen den größten Weg zurücklegt, greifen die beiden Tragstäbe an, die die Funktion haben, die Rollobahn zu bewegen und gleichzeitig auch senkrecht zur Fensterscheibe zu führen. Auf diese Weise kommt das bekannte Fensterrollo ohne seitliche Führungsschienen aus. Es eignet sich deswegen insbesondere auch für solche Fahrzeugtüren, bei denen das Fenster keinen seitlichen und oberen Rahmen hat, wie dies beispielsweise bei Coupes üblich ist.

Der Antrieb der beiden Tragstäbe geschieht mittels linienförmiger biegeelastischer Antriebsglieder, die auf der Außenseite mit einer Rundumverzahnung versehen sind. Die Antriebsglieder kämmen mit einem Zahnrad, das auf der Ausgangswelle eines Getriebemotors sitzt. Durch in Gang setzen des Getriebemotors werden die Tragstäbe ausgefahren oder zurückgezogen. Beim Ausfahren nehmen sie die Rollobahn mit und spannen sie gegen die Wirkung des Federmotors vor der Fensterscheibe auf. Wenn der Antriebsmotor in der entgegengesetzten Richtung eingeschaltet wird, werden die Tragstäbe zurückgezogen, und der Federmotor bekommt Gelegenheit bekommt, die Rollobahn auf der Wickelwelle aufzuwickeln.

Der Aufwand für ein derartiges Rollo, verglichen mit einem manuellen Rollo, ist verhältnismäßig groß, weil ein zusätzlicher Elektromotor benötigt wird. Der Aufwand beschränkt sich jedoch nicht nur auf den zusätzlichen Elektromotor, sondern es ist eine zusätzliche Verkabelung und ein zusätzlicher Bedienschalter im Fahrzeug erforderlich.

Ausgehend hiervon ist es Aufgabe der Erfindung ein halbautomatisches Fensterrollo zu schaffen.

Diese Aufgabe wird erfindungsgemäß durch eine Anordnung mit den Merkmalen des Anspruches 1 gelöst.

Das Rollo ist in dem Korpus einer Kraftfahrzeugtür untergebracht. Der Korpus weist eine Korpusoberkante auf, unterhalb derer die Wickelwelle des Rollos drehbar gelagert ist. Mit der Wickelwelle ist ein Federmotor verbunden, der sich außerhalb oder innerhalb der Wickelwelle befinden kann. Der Federmotor dient dazu die Wickelwelle im Sinne des Aufwickelns einer daran befestigten Rollobahn in Umdrehungen zu versetzen. Die Rollobahn ist an ihrer von der Wickelwelle abliegenden Kante mit einem Zugstab versehen, um eine manuelle Betätigung zu ermöglichen.

Neben der Rollobahn befindet sich in der Fahrzeugtür eine Fensterscheibe, die in Führungsschienen senkrecht zu der Korpuskante bewegbar geführt ist. Die Führungseinrichtung besteht üblicherweise aus zwei Führungsschienen, die parallel zueinander verlaufen. Diese Führungsschienen beschränken sich, je nach Ausführung der Fahrzeugtür, auf den Korpus oder, wenn es sich um ein Fenster mit Rahmen handelt, erstrecken sie sich in dem Rahmen aus dem Korpus heraus.

Die Fensterscheibe ist zur Führung in den Führungsschienen mit zwei zumindest abschnittsweise parallelen Seitenkanten versehen. Quer zu den beiden Seitenkanten verläuft eine Unterkante der Fensterscheibe, die entweder frei zugänglich ist, oder die mit einer Verstärkungs- oder Armierungsschiene versehen ist.

An dieser Fensterunterkante greift unmittelbar oder über die Armierungsschiene der Fensterheber an. Der Fensterheber ist elektrisch betätigt und setzt sich aus einem Getriebemotor und einer Seilzugeinrichtung zusammen. Auf diese Weise wird das Fenster kippfrei an wenigstens zwei voneinander beabstandeten Stellen im Bereich der Unterkante formschlüssig in beiden Richtungen parallel zu den Führungsschienen bewegt.

Um die Rollobahn in jeder aufgespannten Zwischenstellung zu halten, ist wenigstens ein Tragstab vorgesehen, der in einer Führung längsverschieblich geführt ist. Die Führung sitzt innerhalb des Korpus und der Tragstab kann durch den Korpus abschnittsweise nach außen vortreten. Der Tragstab soll nicht nur Druckkräfte übertragen, sondern auch hinreichend steif sein, um den Zugstab gegen die Fensterscheibe angedrückt zu halten.

Der Führungseinrichtung ist außerdem eine Bremseinrichtung zugeordnet, deren Bremskraft so bemessen ist, dass der Federmotor sie nicht überwinden kann.

Zum Ausfahren des Rollos wird der Zugstab mit der Hand erfasst und gegen das obere Ende des Kraftfahrzeugfensters geführt. Dabei wird gleichzeitig der mit dem Zustab zugund druckfest verbundene Tragstab aus dem Korpus ausgezogen. Sobald der Zugstab losgelassen wird, bleibt die Rollobahn aufgrund des Zusammenwirkens des Tragstabs mit der Bremseinrichtung an der betreffenden Stelle stehen und spannt den Zugstab elastisch gegen die Innenseite der Fensterscheibe vor. Zum Einfahren wird der Zugstab von Hand gegen die Korpuskante bewegt. Hierzu muss manuell die Kraft der Bremseinrichtung überwunden werden. Der Federmotor wickelt gleichzeitig die Rollobahn auf der Wickelwelle auf.

Die neue Anordnung ist insofern halbautomatisch als beim Einfahren der Fensterscheibe in den Türkorpus, d.h. beim Öffnen des Fensters, zwangsläufig der Tragstab in den Korpus zurückgeführt wird, damit synchron mit dem Absenken der Fensterscheibe auch die Oberkante der Rollobahn sich der Korpusoberkante nähert. Hierdurch wird sichergestellt, dass die Rollobahn immer durch die Fensterscheibe gegen den Fahrtwind der an der Außenseite der Fensterscheibe wirksam ist, geschützt ist.

Um die halbautomatische Bewegung zu erreichen ist eine Kupplungs- oder Mitnehmeranordnung vorgesehen, die zwischen der Fensterunterkante und dem Zugstab wirksam ist. Sie ist so gestaltet, dass die Mitnahmewirkung lediglich beim Absenken der Scheibe zustande kommt, wenn sich gleichzeitig der Tragstab in der ausgefahrenen oder teilausgefahrenen Stellung befindet. Unter Fensterunterkante ist hierbei die nackte Scheibenunterkante zu verstehen, oder eine eventuell daran befestigte Armierungsschiene, über die die Fensterscheibe mit dem Fensterheber gekuppelt ist.

Bei der Fahrzeugtür kann es sich um eine solche handeln mit einem Korpus, der auf der Außenseite von einer Blechhaut und auf der Innenseite von einer Innenverkleidung begrenzt ist. Gegebenenfalls kann der Korpus noch eine Zwischenwand enthalten, an der beispielsweise der Elektromotor des Fensterhebers befestigt ist.

Der weitere Vorteil der erfindungsgemäßen Anordnung besteht darin, dass kein zusätzlicher Antriebsmotor zum Einfahren der Rollobahn erforderlich ist. Dadurch entfällt auch eine zusätzliche Verkabelung und die Notwendigkeit, einen Betätigungsschalter vorzusehen. Bei entsprechender Auslegung ist ein solches Rollo nicht nennenswert kostenaufwändiger als ein rein manuelles Rollo. Hingegen sichert der halbautomatische Betrieb die Rollobahn gegen Beschädigung durch den Fahrtwind.

Die besagte Korpuskante kann bei einem rahmenlosen Fenster die Türoberkante sein. Im Falle eines Fensters mit Rahmen ist die Korpusoberkante gleichzeitig die Fensterunterkante.

Die Fensterscheibe kann plan sein oder um eine Achse gekrümmt sein, die parallel zur Fahrzeuglängsachse liegt.

Im Falle eines rahmenslosen Fensters befinden sich die Führungsschienen lediglich innerhalb des Korpus und treten nicht nach oben über die Korpusoberkante aus. Wenn es sich um ein Fenster mit Rahmen handelt, verlaufen die Führungsschienen bis in den Rahmen oberhalb der Korpuskante.

Der Antrieb der Fensterscheibe kann mit der heute üblichen Konstruktion erfolgen. Hierzu wird ein Getriebemotor vorgesehen, auf dessen Ausgangswelle eine Seilscheibe sitzt. Die Seilscheibe treibt ein abschnittsweise in Hüllen geführtes Seil an, dessen beiden Enden mit der Seilscheibe verbunden sind oder das endlos ausgeführt ist. Innerhalb des Korpus ist das Seil so geführt, dass zwei parallel zueinander verlaufende Trumme entstehen, die dieselbe Bewegungsrichtung zeigen, wenn das Seil in Bewegung gesetzt wird. Dadurch kann die Fensterscheibe an zwei voneinander beabstandeten Punkten mit einer Betätigungskraft beaufschlagt werden, was Verkantungen in den Führungsschienen vermeidet.

Die Wickelwelle kann zylindrisch sein, wenn die Fensteroberkante parallel zu der Korpuskante verläuft, oder sie kann leicht konisch sein, wenn die Fensteroberkante geneigt verläuft. Bei Verwendung lediglich eines Tragstabs ist eine solche konische Wickelwelle ohne weiteres verwendbar.

Die Wickelwelle ist in jedem Falle innerhalb des Korpus verdeckt angeordnet, weshalb in der Korpusoberkante ein entsprechender Auszugsschlitz vorgesehen ist, durch den hindurch die Rollobahn nach außen bewegt werden kann.

Der Zugstab erstreckt sich zweckmäßigerweise über die gesamte Breite der betreffenden Rollobahnkante, um die Rollobahn über die gesamte Länge der Kante auszusteifen.

An dem Zugstab kann ein von Hand zu erfassender Griff vorgesehen sein, um die Handhabung zu erleichtern. Anstelle der Verwendung lediglich eines Tragstabs können noch zwei parallel nebeneinander angeordnete Tragstäbe vorgesehen sein.

Im Falle der Verwendung einer Fahrzeugtür mit Fensterrahmen können im Bereich der Fensterunterkante Nuten enthalten sein, in die der Zugstab hineingeführt wird, wenn das Rollo aufgespannt wird. Diese Nuten verhindern, dass der Zugstab in Querrichtung zum Fahrzeug in Schwingungen gerät, ohne besonders steife Tragstäbe verwenden zu.

Zur Führung des oder der Tragstäbe sind vorteilhafterweise Führungsbüchsen vorgesehen. Diese Führungsbüchsen können gleichzeitig als Bremseinrichtungen ausgebildet sein. Hierzu können sie beispielsweise mit federelastischen Andruckgliedern versehen sein, die den Tragstab gegen eine Seite der Führungsbüchse drücken, um so die Bremskraft zu erzeugen.

Die Mitnehmereinrichtung besteht im einfachsten Falle aus einem Mitnehmer, der an dem Tragstab unbeweglich sitzt und der sich mit einem Ende in den Bewegungsweg der Unterkante der Fensterscheibe befindet. Wenn die Fensterscheibe nach unten bewegt wird, wird so über den Mitnehmer der Tragstab nach unten bewegt. Wenn die Fensterscheibe in der geschlossenen Stellung steht kann der Tragstab beliebig auf- und/oder abbewegt werden. Ist hingegen die Fensterscheibe geöffnet und befindet sich damit die Fensterunterkante in der tiefsten Stellung ist ein Herausziehen des Tragstab und damit ein Aufspannen der Rollobahn unmöglich. Gleichzeitig wird die gegebenenfalls aufgespannte Rollobahn mit nach unten bewegt.

Im Übrigen sind Weiterbildungen der Erfindung Gegenstand von Unteransprüchen.

Die nachfolgende Figurenbeschreibung beschränkt sich auf die Erläuterung der wesentlichen Aspekte der Erfindung. Es ist klar, dass eine Reihe von Abwandlungen möglich sind. Kleinere, nicht beschriebene Details kann der Fachmann in der gewohnten Weise den Zeichnungen entnehmen, die insoweit die Figurenbeschreibung ergänzen.

In der Zeichnung sind Ausführungsbeispiele des Gegenstandes der Erfindung dargestellt. Es zeigen:
- Fig. 1: eine Draufsicht auf die Innenseite einer hinteren linken Kraftfahrzeugtür mit eingefahrenem Seitenfensterrollo;
- Fig. 2: die Kraftfahrzeugtür nach Fig. 1 mit ausgefahrenem Seitenfensterrollo und geschlossenem Fenster und
- Fig. 3: die Kraftfahrzeugtür nach Fig. 1 mit geöffnetem Seitenfenster;
- Fig. 4: ein anderes Ausführungsbeispiel der Kraftfahrzeugtür nach Fig. 1, mit zwei Tragstäben.

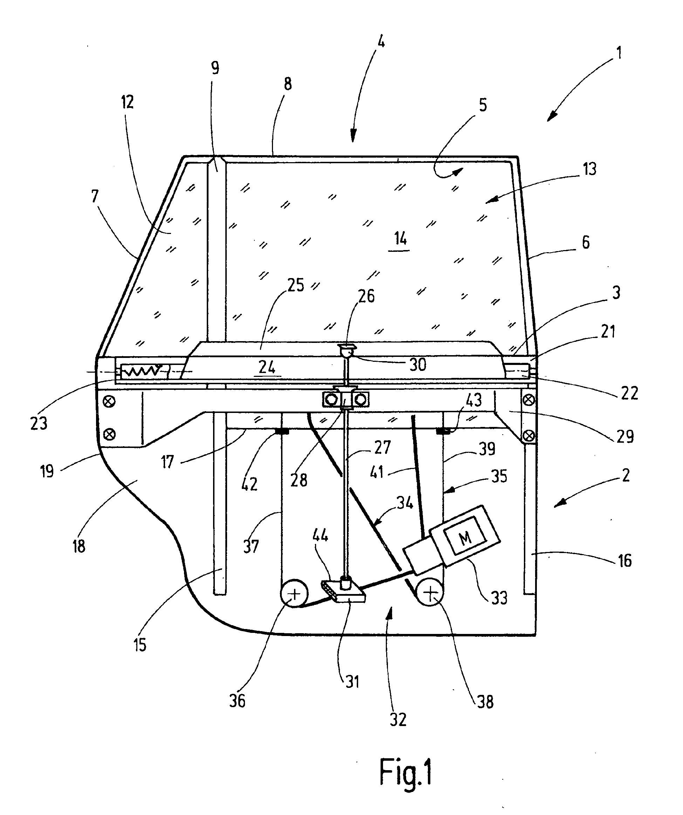

In Fig. 1 ist eine Kraftfahrzeugtür 1 in einer stark schematisierten nicht maßstäblichen Darstellung veranschaulicht. Aus der Fig. 1 sind sämtliche Teile weggelassen die für das Verständnis der Erfindung nicht erforderlich sind aber selbstverständlich bei jeder Kraftfahrzeugtür vorhanden sind. Hierzu zählen beispielsweise die Türscharnierbänder, die Feststelleinrichtung für die Tür, die Schlossteile zum Verschließen der Tür, Lautsprecher, Luftkanäle und dergleichen mehr. Die Innenverkleidung der Tür 1 ist abgenommen, um den Blick in den Türinnenraum frei zu geben.

Wie die Fig. 1 erkennen lässt gehört zu der Kraftfahrzeugtür 1 ein Korpus 2, der an einer Korpusoberkante 3 endet. Über der Korpusoberkante 3 spannt sich ein Fensterrahmen 4, der eine Fensteröffnung 5 zusammen mit der Korpusoberkante 3 umgrenzt. Der Fensterrahmen 4 setzt sich aus zwei von der Korpusoberkante wegführenden Rahmenteilen 6 und 7 sowie einem quer verlaufenden Rahmenabschnitt 8 zusammen. Durch einen vertikalen Steg 9 ist die Fensteröffnung in zwei Abschnitte aufgeteilt, einen linken, etwa dreieckförmigen Abschnitt 11 mit darin angeordneter fester Fensterscheibe 12 sowie einen rechten zur Fahrzeugfront hin gelegenen Abschnitt 13 mit einer auf und ab bewegbaren Fensterscheibe 14. Um die Fensterscheibe 14 bewegen zu können, enthält der Steg 9 sowie der rechte Rahmenabschnitt 6 jeweils eine mit einer Führungsnut versehene Führungsschiene 15, 16, die sich jeweils bis in den Korpus 2 hinein fortsetzt. Die Fensterscheibe 14 ist so bemessen, dass sie im angehobenen Zustand den Abschnitt 13 der Fensteröffnung 5 vollständig verschließt. Von der Fensterscheibe 14 ist innerhalb des Korpus 2 deren Unterkante 17 erkennbar. Die Scheibenunterkante 17 verläuft parallel zu der Korpusoberkante 3.

Der Korpus 2 weist in bekannter Weise eine im weitesten Sinne schalenförmige Gestalt auf und wird nach außen von der äußeren Blechhaut 18 und einer umlaufenden Seitenwand 19 begrenzt. Die Seitenwand 19 ist entsprechend konturiert und hat, je nach der Karosserieform, unterschiedliche Höhe.

Unterhalb der Korpusoberkante 3 befindet sich in dem Korpus 2 eine Art Kassette 21, in der eine Wickelwelle 22 drehbar gelagert ist. Die Wickelwelle 22 verläuft parallel zu der Korpusoberkante 3 und damit auch parallel zu der Rahmenoberkante 8.

Wie der aufgebrochene Abschnitt auf der linken Seite der Wickelwelle 22 erkennen lässt, sitzt in der Wickelwelle 22 ein Federmotor 23, dessen eines Ende mit dem Korpus 2 drehfest verbunden ist und dessen innenliegendes Ende an der rohrförmigen Wickelwelle 22 verankert ist. Mit Hilfe des Federmotors 23, der von einer Schraubenzugfeder gebildet ist, wird die Wickelwelle 22 in einem Drehsinn vorgespannt.

Für die Ausführung des Federmotors 23 sind aus dem Stand der Technik sehr viele Lösungen bekannt. Da die spezielle Art des Federmotors 23 für die Erfindung hier keine Rolle spielt, genügt die schematische Darstellung.

An der Wickelwelle 22 ist mit einer Kante eine Rollobahn 24 befestigt. Die von der Wickelwelle 22 abliegende Kante der Rollobahn 24 ist mit einem Zugstab 25 versehen, der etwa mittig einen Handgriff 26 trägt.

Das bis dahin beschriebene Fensterrollo ist frei von Führungsschienen. Um die Rollobahn 24 im aufgespannten Zustand zu Halten, ist ein Trag- und Führungsstab 27 vorgesehen. Bei dem Trag- oder Führungsstab 27 handelt es sich um einen zylindrischen oder profilierten Stab mit geringem Durchmesser der hinreichend knicksteif ist um die bei der normalen Handhabung auftretenden Kräfte ausknicksicher zu beherrschen.

Zur Führung des Tragstabs 27 sitzt unterhalb der Wickelwelle 22 in dem Korpus 2 eine Führungsbüchse 28, die gleichzeitig als Bremseinrichtung dient. Die Führungsbüchse 28 ist an einer Traverse 29 befestigt, die sich unterhalb der Kassette 21 über die Breite des Korpus 2, wie gezeigt, erstreckt. Mit Hilfe dieser Führungsbüchse 28 ist der Tragstab 27 in einer Richtung rechtwinklig zu der Korpusoberkante 3 geführt. Durch entsprechende nicht gezeigte Federglieder in der Führungsbüchse 28 wird eine Reib- oder Bremskraft erzeugt, die dafür sorgt, dass der Tragstab 27 nur schwergängig in der Führungsbüchse 28 verschiebbar ist. Wie die Figur erkennen lässt, ist der Tragstab 27 mit seinem aus dem Korpus 2 herausragenden Ende bei 30 mit dem Zugstab 25 verbunden, und zwar unmittelbar unterhalb des Handgriffs 26. An dem innenliegenden Ende des Tragstabs 27 sitzt ein in Richtung zu der Blechhaut 18 nach außen ragender Mitnehmer 31.

Die funktionale Länge des Tragstabs 27 ergibt sich aus der nachfolgenden Funktionsbeschreibung.

Ehe auf die Funktionsweise eingegangen wird, sei noch kurz der prinzipielle Aufbau eines Fensterhebers 32 erläutert, der verwendet wird, um die Fensterscheibe 14 elektrisch zu betätigen.

Zu dem Fensterheber 32 gehört ein Getriebemotor 33, der über eine nicht erkennbare Seilscheibe einen abschnittsweise in Hüllen 34 geführtes Seil 35 antreibt. Das Seil 35 kann ein endloses Seil sein, das in mehreren Umgängen um eine Seilscheibe herumliegt, oder es kann ein Seil sein, dessen Enden auf der Seilscheibe festgelegt sind.

Von dem Getriebemotor 33 läuft das Seil 35 zu einer ersten Umlenkrolle 36, die sich unterhalb des unteren Endes der Führungsschienen 15 und 16 drehbar angeordnet ist. Die Achse der Umlenkrolle 36 steht senkrecht auf der durch die Fensterscheibe 14 definierte Ebene. Sie ist an nicht weiter gezeigten Tragstrukturen innerhalb des Korpus drehbar gelagert. Der Seilabschnitt zwischen der Umlenkrolle 36 und dem Getriebemotor 33 verläuft in einer Hülle.

Im Anschluss an die Seilscheibe 36 bildet das Seil 35 ein Seiltrum 37, das parallel zu der Führungsschiene 15 in Richtung auf die Korpusoberkante 3 läuft.

Knapp unterhalb der Korpusoberkante 3 befindet sich eine durch die Traverse 29 und die Kassette 21 abgedeckte weitere Seilscheibe, an der das Seil 35 in Richtung auf eine Umlenkscheibe 38 umgelenkt wird. Der Seilabschnitt zwischen der Seilscheibe 38 und der Seilscheibe unterhalb der Korpusoberkante 3 verläuft wiederum in einer Hülle.

Im Anschluss an die Umlenkrolle 38 bildet das Seil 35 wiederum ein Seiltrum 39, das parallel zu dem Seiltrum 37 und damit parallel zu den Führungsschienen 15 und 16 nach oben zu der Korpusoberkante 3 verläuft.

Die Seilscheibe 38 befindet sich funktional auf derselben Höhe wie die Seilscheibe 36 und ist zu dieser achsparallel.

Achsparallel zu der Umlenkscheibe, die von der Traverse 29 verdeckt ist und die sich an das Seiltrum 37 anschließt, gibt es eine weitere Seilscheibe, an der das Seiltrum 39 endet, um von dort in einem Hüllenabschnitt 41 zu dem Getriebemotor 33 zurückgeführt zu werden.

Aufgrund des beschriebenen Verlaufs des Seils 35 entstehen die beiden Seiltrumme 37 und 39, die beim in Gang setzen des Getriebemotors 33 sich gleichsinnig parallel zueinander bewegen.

An den beiden Seiltrummen 37 und 39 sitzen Mitnehmer 42 und 43, die zug- und druckfest das Seiltrum 37 bzw. 39 mit der Scheibenunterkante 17 verbinden.

Die Anordnung der beschriebenen Teile in dem Korpus 2 ist lagenweise. Der äußeren Blechhaut 18 am dichtesten benachbart verlaufen die Seiltrumme 37 und 39 sowie die dazwischen sich erstreckenden Seilabschnitte zwischen den Seilscheiben 36 und 38 und den damit korrespondieren durch die Quertraverse 39 abgedeckten Seilscheiben. In einem größeren Abstand verläuft die Fensterscheibe 14, d.h. die Seiltrumme 37, 39 befinden sich in dem Spalt zwischen der äußeren Blechhaut 19 und der Fensterscheibe 14. Am weitesten von der äußeren Blechhaut 18 entfernt ist die Quertraverse 29 mit der daran befestigten Führungsbüchse 28. Zwischen dem Tragstab 27 und der Fensterscheibe 14 befinden sich die Wickelwelle 22 und die Rollobahn 24. Der Mitnehmer 31 zeigt, wie die Figur andeutet, in Richtung auf die Blechhaut 18, d.h. nach außen, und er ragt mit einem Abschnitt 44 in das Lichtraumprofil des Bewegungswegs der Scheibenunterkante 17.

Bei der erläuterten vereinfachten Konstruktion befindet sich der Getriebemotor 23 ebenfalls in dem Spalt zwischen der Fensterscheibe 14 und der Blechaußenhaut 18.

Der insoweit beschriebene innere Aufbau der Kraftfahrzeugtür 1 wird durch eine Innenverkleidung zum Fahrzeuginneren hin verschlossen. Die Innenverkleidung bildet mit dem Korpus 2 an der Oberkante einen Schlitz durch den hindurch die Rollobahn 24 ausgezogen werden kann. Außerdem ist eine Öffnung vorhanden, durch die hindurch sich der Tragstab 27 in das Innere des Korpus bewegen kann.

Zur Erläuterung der Funktion wird von einer Position ausgegangen, wie sie in Fig. 1 gezeigt ist. Bei der Darstellung in Fig. 1 ist das Fenster geschlossen, d.h. die Fensterscheibe 14 befindet sich im angehobenen Zustand bis ihre Oberkante in der Nut des Rahmenabschnitts 8 eintaucht. In dieser Position wird die Fensterscheibe durch den Fensterheber gehalten. Der Getriebemotor 33 ist selbsthemmend und verriegelt so die Position der Mitnehmer 42 und 43. Auch die beim Fahren auftretenden Erschütterungen vermögen die Fensterscheibe 14 nicht nach unten zu bewegen.

Die Rollobahn 24 des Fensterrollos ist auf der Wickelwelle 22 unter der Wirkung des Federmotors 23 aufgewickelt. Der Tragstab 27 ist soweit wie möglich in den Korpus 2 eingeschoben.

Ausgehend von der gezeigten Stellung kann die Rollobahn vor der Fensteröffnung aufgespannt werden. Der Benutzer greift hierzu den Handgriff 26 und bewegt ihn in Richtung auf den Rahmenabschnitt 8 nach oben. Am Ende der Ausfahrbewegung verläuft der Zugstab 25, wie gezeigt, knapp unterhalb der Unterkante des Rahmenabschnittes 8. Die Rollobahn 24 verdeckt nahezu vollständig die Fensteröffnung 5 und zwar sowohl den Abschnitt 11 als auch den Abschnitt 12. Der Zuschnitt der Rollobahn 25 ist entsprechend etwa trapezförmig gestaltet. Der Mitnehmer 31 liegt nahezu an der Fensterunterkante 17 an, woraus sich auch dessen Konstruktiver Länge ergibt.

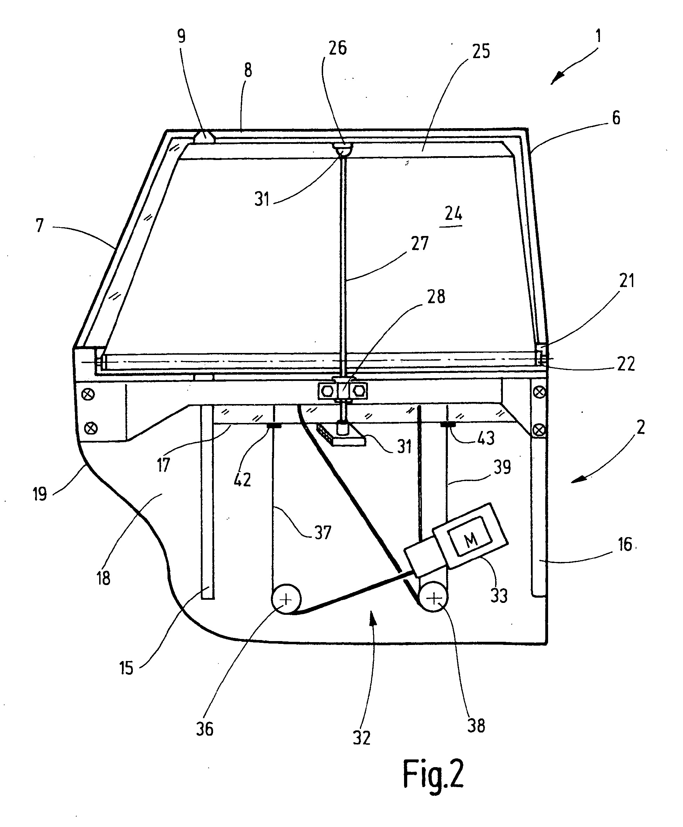

Zufolge der Bremswirkung der Führungsbüchse 28 bleibt die Rollobahn 25, wie in Fig. 2 gezeigt, aufgespannt. Die Bremswirkung ist so groß, dass weder der Federmotor 23 alleine noch in Verbindung mit den auftretendenden Fahrzeugerschütterungen die Bremskräfte überwunden werden können und der Zugstab 27 wieder zurück in den Korpus 2 rutschen kann.

Um die Rollobahn wieder einzufahren, muss der Benutzer den Handgriff 26 erfassen und den Tragstab 27 mit Kraft in den Korpus 2 zurückdrücken. Dabei wird gleichzeitig die Rollobahn 24 von dem Federmotor 23 aufgewickelt.

Um zu verhindern, dass bei geöffnetem Fenster, also abgesenkter Fensterscheibe 14, versehentlich das Rollo aufgespannt wird und durch den Fahrtwind beschädigt wird, ist ein halbautomatischer Betrieb möglich.

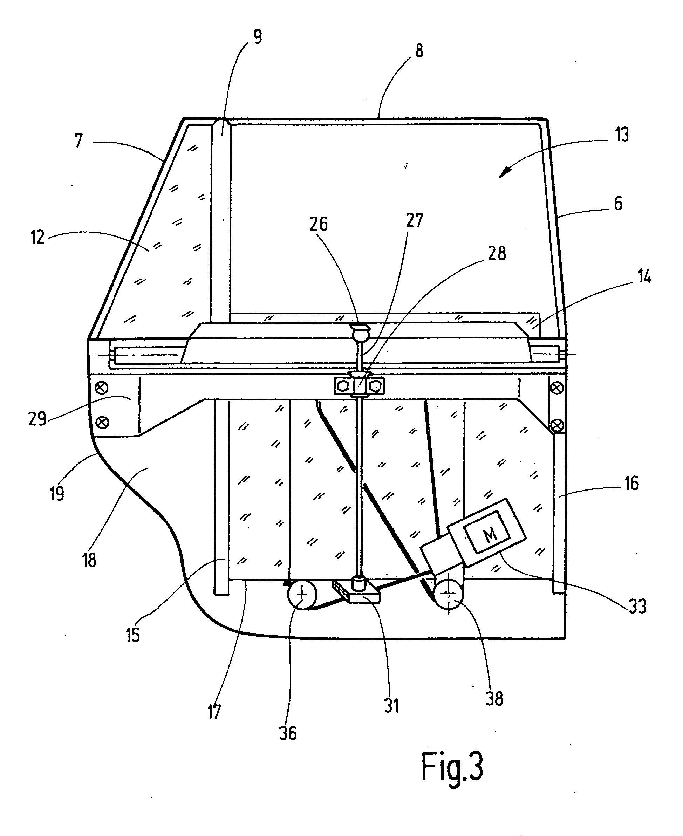

Wie Fig. 2 erkennen lässt, befindet sich bei aufgespannter Rollobahn 24 der Mitnehmer 31 unmittelbar unter der Scheibenunterkante 17. Er ragt mit seinem Arm 44 in den Lichtraum der Scheibenunterkante 17 hinein. Wenn in dieser in Fig. 2 gezeigten Stellung der Getriebemotor 33 in Gang gesetzt wird, um das Fenster zu öffnen, wird durch die Seiltrumme 37 und 39 die Fensterscheibe 14 nach unten in den Korpus 2 hineingezogen. Dabei nimmt die sich nach unten bewegende Scheibenunterkante 17 den Mitnehmer 31 mit, mit dem sie formschlüssig zusammenwirkt. Das Zusammenwirken zwischen dem Mitnehmer 31 und der Scheibenunterkante 17 sorgt dafür, dass auch der Tragstab 27 in den Korpus 2 hineingezogen wird, womit letztendlich dieselbe Bewegung zustande kommt, wie wenn der Benutzer an dem Handgriff 26 den Tragstab 27 nach unten drückt. Das Ende der Bewegung zeigt Fig. 3. Die Scheibe 14 ist vollständig abgesenkt, d.h. das Fenster ist vollständig geöffnet und die Rollobahn 24 befindet sich wieder in der Stellung entsprechend Fig. 1, d.h. das Rollo ist ebenfalls geöffnet.

Wie sich aus der Erläuterung ergibt, handelt es sich bei dem neuen Rollo um ein halbautomatisches Rollo, das willkürlich manuell geöffnet und geschlossen werden kann. Die Kupplungseinrichtung zwischen der Fensterscheibe und dem Rollo sorgt dafür, dass das Rollo automatisch eingefahren wird, wenn auch die Fensterscheibe 14 abgesenkt wird. Hierzu wird die Kraft des Fensterhebers verwendet.

Es ist somit möglich ohne Weiteres das Fensterrollo gegen den Fahrtwind zu schützen. Andererseits hat der Fahrer die Möglichkeit, durch einfaches Betätigen des Fensterhebers an dem betreffenden Fenster ferngesteuert das an sich manuell zu betätigende Fensterrollo zu öffnen, falls er dies wünscht.

Der Tragstab 27 muss, wie sich aus der Erläuterung ergibt, hinreichend fest sein, damit er auch bei der manuellen Betätigung nicht versehentlich abgeknickt wird. Als Material für den Tragstab eignen sich deswegen insbesondere gut faserverstärkte Rohre, beispielsweise kohlefaserverstärkte Rohre, die sehr fest sind.

Da der Tragstab 27 gleichzeitig auch den Zugstab 25 klapperfrei gegen die Fensterscheibe 14 andrücken soll, kann es vorteilhaft sein, wenn die Führungsbüchse 28 nicht, wie gezeigt, vollkommen starr befestigt ist, sondern um eine zu der Korpusoberkante 3 parallele Achse federvorgespannt begrenzt schwenkbar ist.

Wie sich aus der Figurenbeschreibung weiter ergibt, bilden die Scheibenunterkante 17 und der Mitnehmer 31 eine lediglich in einer Richtung wirksame Kupplungseinrichtung, um die Bewegung der Fensterscheibe 14 im Sinne des Öffnens auf den Tragstab 27 und damit das Rollo zu übertragen.

Die gezeigte Anordnung mit lediglich einem Tragstab 27 kann auch für Fenster verwendet werden, bei denen der obere Rahmenabschnitt 8 unter einem spitzen Winkel zu der Korpusoberkante 3, und damit der Fensterunterkante, verläuft. In einem solchen Falle ist die Wickelwelle 22 nicht zylindrisch sondern leicht konisch, um während des Ein- und Ausfahrens die notwendige Schwenkbewegung des Zugstabs 25 zu erhalten. In einem solchen Fall ist die Verbindung zwischen dem Tragstab 27 und dem Zugstab 25 so gestaltet, dass die Schwenkbewegung durch den Tragstab 27 nicht behindert wird.

Die Erfindung ist in Verbindung mit einer Kraftfahrzeugtür 1 erläutert, bei der das Türfenster einen Rahmen aufweist. Im Automobilbau sind auch rahmenlose Fenster bekannt. Solche Fenster werden insbesondere bei Coupes verwendet. Wie unschwer zu erkennen ist, eignet sich die erläuterte Konstruktion auch für rahmenlose Fenster, da es für die Funktion des Rollos nicht darauf ankommt, ob der Fensterrahmen 4 vorhanden ist oder nicht.

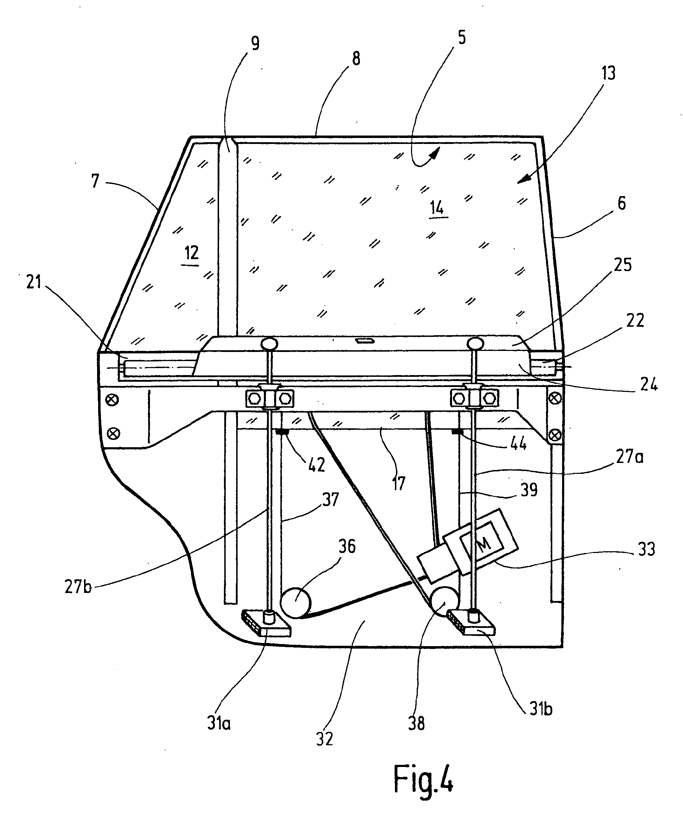

Fig. 4 zeigt schließlich noch schematisch eine Anordnung, bei der anstelle von einem Tragstab 27 zwei Tragstäbe 27a und 27b vorhanden sind. Dementsprechend sind zwei Führungsbüchsen 28a und 28b sowie zwei Mitnehmer 31a und 31b vorhanden. Die Funktionsweise des Rollos ist im Übrigen genau so, wie dies zuvor in Verbindung mit den Figuren 1 bis 3 erläutert ist.

Ein Fensterrollo für Kraftfahrzeugtüren weist eine unterhalb der Fensterunterkante angeordnete Wickelwelle auf. An der Wickelwelle ist mit einer Kante die Rollobahn befestigt, deren andere Kante an einem Zugstab angebracht ist. Der Zugstab ist mit wenigstens einem Tragstab verbunden, der etwa rechtwinklig zu dem Zugstab angeordnet ist und in den Korpus der Tür hineinragt. Dort ist der Tragstab geführt und er ist an seinem innenliegenden Ende mit einem Mitnehmer versehen. Der Mitnehmer ist dazu eingerichtet mit der Scheibenunterkante zusammen zu wirken, damit beim Öffnen des Fensters halbautomatisch auch das Rollo geöffnet wird.

## Patentansprüche

1. Kraftfahrzeugtür (1)
mit einem Korpus (2), der bezogen auf die Gebrauchslage eine Korpusoberkante (3) aufweist, die im wesentlichen horizontal verläuft,
mit wenigstens einer Fensterscheibe (14), die zwei zueinander parallele Seitenkantenabschnitte und eine Unterkante (17) aufweist,
mit Führungseinrichtungen (15,16), die an dem Korpus (2) vorgesehen sind und in denen die Fensterscheibe (14) mit ihren Seitenkantenabschnitten im wesentlichen senkrecht zu der Korpusoberkante (3) geführt ist,
mit einem elektrischen Fensterheber (32), der mit der Unterkante (17) der Fensterscheibe (14) kinematisch gekoppelt und der dazu eingerichtet ist, die Fensterscheibe (14) in ihren Führungseinrichtungen (15,16) auf oder ab zu bewegen,
mit einer Wickelwelle (22), die unterhalb der Korpusoberkante (3) in dem Korpus (2) drehbar gelagert ist,
mit einer Rollobahn (24), die einen der Fensterscheibe (12,14) ähnlichen Zuschnitt aufweist, die mit einer Kante an der Wickelwelle (22) befestigt ist und die an ihrer gegenüber liegenden Kante mit einem Zugstab (25) verbunden ist, der zur manuellen Betätigung der Rollobahn (24) dient,
mit einem Federmotor (23), der mit der Wickelwelle (22) gekuppelt ist um die Wickelwelle (22) im Sinne des Aufwickelns der Rollobahn (24) auf die Wickelwelle (22) vorzuspannen,
mit wenigstens einem Tragstab (27), der bezogen auf den normalen Gebrauch knicksteif ist, der in dem Korpus (2) im wesentlichen rechtwinkelig zu der Korpusoberkante (3) verschieblich geführt, der mit seinem äußeren Ende zug- und druckfest mit dem Zugstab (25) verbunden ist und dessen innen liegendes Ende ständig in dem Korpus (2) verbleibt,
mit einer Bremseinrichtung (28) für den Tragstab (27), deren Bremskraft derart bemessen ist, dass die Kraft des Federmotors (23) nicht ausreicht den Tragstab (27) zu bewegen, und
mit einer in lediglich einer Richtung wirkenden Kupplungseinrichtung (17,31), die kinematisch zwischen der Unterkante (17) der Fensterscheibe (14) und dem Tragstab (27) angeordnet ist, derart, dass die Rollobahn (24) bei in der oberen Stellung befindlichen Fensterscheibe (14) jederzeit manuell unter gleichzeitiger Mitnahme des Tragstabs (27) auf und ab bewegbar ist und dass der nach oben ausgefahrene Tragstab (27) zwangläufig mit der Fensterscheibe (14) abwärts bewegt wird, wenn die Fensterscheibe (14) durch die zugeordnete Antriebseinrichtung (33,35) abwärts bewegt wird.

2. Fahrzeugtür nach Anspruch 1, **dadurch gekennzeichnet, dass** der Korpus (2) von einer äußeren Blechhaut (18) und einer Innenverkleidung begrenzt ist.

3. Fahrzeugtür nach Anspruch 1, **dadurch gekennzeichnet, dass** der Korpus (2) mit Scharnieren versehen ist, um den Korpus (2) an einer Fahrzeugkarosserie anzuscharnieren.

4. Fahrzeugtür nach Anspruch 1, **dadurch gekennzeichnet, dass** die Korpusoberkante (3) bei einem rahmenlosen Fenster die Türoberkante bildet.

5. Fahrzeugtür nach Anspruch 1, **dadurch gekennzeichnet, dass** bei einer Kraftfahrzeugtür (1) mit Fensterrahmen (4) die Korpusoberkante (3) die Fensterunterkante bildet.

6. Fahrzeugtür nach Anspruch 1, **dadurch gekennzeichnet, dass** die Fensterscheibe (14) bezüglich einer horizontalen Achse gekrümmt ist.

7. Fahrzeugtür nach Anspruch 4, **dadurch gekennzeichnet, dass** die Führungseinrichtungen (15,16) Führungsschienen sind, die lediglich in dem Korpus (3) verlaufen.

8. Fahrzeugtür nach Anspruch 5, **dadurch gekennzeichnet, dass** die Führungseinrichtungen (15,16) Führungsschienen sind, die in dem Korpus (3) und einem an dem Korpus (3) vorgesehenen Fensterrahmen (4) verlaufen.

9. Fahrzeugtür nach Anspruch 1, **dadurch gekennzeichnet, dass** der elektrische Fensterheber (32) einen elektrischen Getriebemotor (33) mit einer Ausgangswelle umfasst.

10. Fahrzeugtür nach Anspruch 9, **dadurch gekennzeichnet, dass** auf der Ausgangswelle eine Seilscheibe sitzt.

11. Fahrzeugtür nach Anspruch 1, **dadurch gekennzeichnet, dass** der elektrische Fensterheber (32) eine Seilzugeinrichtung aufweist, die mit der Unterkante (17) der Fensterscheibe (14) oder einer daran befestigten Schiene verbunden ist.

12. Fahrzeugtür nach Anspruch 1, **dadurch gekennzeichnet, dass** die Wickelwelle (22) eine zylindrische oder leicht konische Wickelwelle ist.

13. Fahrzeugtür nach Anspruch 1, **dadurch gekennzeichnet, dass** die Wickelwelle (22) in dem Korpus (3) verdeckt angeordnet ist.

14. Fahrzeugtür nach Anspruch 1, **dadurch gekennzeichnet, dass** die Rollobahn (24) von einer gelochten Folie oder einem Gewirke gebildet ist.

15. Fahrzeugtür nach Anspruch 1, **dadurch gekennzeichnet, dass** der Zugstab (25) sich über die gesamte Länge der Kante erstreckt, an der er befestigt ist.

16. Fahrzeugtür nach Anspruch 1, **dadurch gekennzeichnet, dass** der Zugstab (25) mit einem von Hand zu erfassenden Griff (26) versehen ist.

17. Fahrzeugtür nach Anspruch 1, **dadurch gekennzeichnet, dass** der Federmotor (23) in der Wickelwelle (22) untergebracht ist.

18. Fahrzeugtür nach Anspruch 1, **dadurch gekennzeichnet, dass** der Federmotor (23) außerhalb der Wickelwelle (22) vorhanden ist.

19. Fahrzeugtür nach Anspruch 1, **dadurch gekennzeichnet, dass** zwei parallel nebeneinander angeordnete Tragstäbe (27a,27b) vorgesehen sind.

20. Fahrzeugtür nach Anspruch 1, **dadurch gekennzeichnet, dass** für den Tragstab (27) eine Führungsbüchse (28) in dem Korpus (3) vorgesehen ist.

21. Fahrzeugtür nach Anspruch 20, **dadurch gekennzeichnet, dass** die Führungsbüchse (28) die Bremseinrichtung für den Tragstab (27) bildet.

22. Fahrzeugtür nach Anspruch 20, **dadurch gekennzeichnet, dass** die Führungsbüchse (28) unterhalb der Korpusoberkante (3) und in deren Nähe angeordnet ist.

23. Fahrzeugtür nach Anspruch 1, **dadurch gekennzeichnet, dass** die Kupplungseinrichtung (17,31) einen Mitnehmer (31) aufweist, der unbeweglich mit dem Tragstab (27) verbunden ist und der in den Bewegungsweg der Unterkante (17) der Fensterscheibe (14) ragt.
